(19) Europäisches Patentamt
European Patent Office
Office européen des brevets

(11) Publication number: 0 182 653
A2

(12) # EUROPEAN PATENT APPLICATION

(21) Application number: 85308419.2

(51) Int. Cl.$^4$: C08G 59/10 , C02F 1/56

(22) Date of filing: 19.11.85

(30) Priority: 20.11.84 GB 8429273

(43) Date of publication of application:
28.05.86 Bulletin 86/22

(84) Designated Contracting States:
BE DE FR GB NL SE

(71) Applicant: THE DOW CHEMICAL COMPANY
2030 Dow Center Abbott Road P.O. Box 1967
Midland, MI 48640(US)

(72) Inventor: Delcour, Kees
Julianastraat 18
NL-4542 BB Hoek(NL)

(74) Representative: Raynor, John et al
W.H. Beck, Greener & Co 7 Stone Buildings Lincoln's Inn
London WC2A 3SZ(GB)

(54) **Process for preparing nitrogen containing water-soluble polymer, polymeric flocculant comprising it, and method of flocculation.**

(57) A nitrogen-containing prepolymer is prepared by adding an epihalohydrin, particularly epichlorohydrin, to piperazine in an amount of more than one mole of epihalohydrin per mole of piperazine, in the substantial absence of strong base.

The prepolymer is reacted with polyalkylene polyamines in the absence of strong base to produce a polymeric flocculant.

EP 0 182 653 A2

# PROCESS FOR PREPARING NITROGEN CONTAINING WATER-SOLUBLE POLYMER, POLYMERIC FLOCCULANT COMPRISING IT, AND METHOD OF FLOCCULATION

This invention relates to the preparation of nitrogen-containing, water soluble polymers prepared from polyamines and a water-soluble piperazine/epihalohydrin prepolymer, and to their use as flocculants.

The condensation of epihalohydrins with piperazine is one which has been known for many years, and which has been carried out under a wide range of varying conditions. For example, U.K. Patents Nos. 1448183 and 992011 disclose methods in which epichlorohydrin is condensed with piperazine, in the presence of strong base, for example, KOH and NaOH, to produce various insoluble solids.

Similarly, U.S. Patent No. 2963483 describes a method for the preparation of N-glycidylpiperazine, and a product prepared by polymerisation thereof. The N-glycidylpiperazine is prepared by treatment of piperazine with epichlorohydrin, to produce an adduct of the formula

(I) 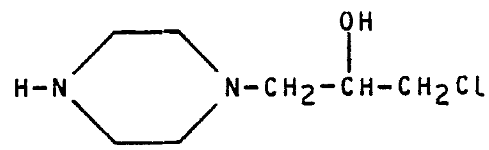

and subsequent treatment of the adduct with a base, for example sodium hydroxide, potassium hydroxide, sodium or potassium alkoxide, calcium hydroxide, or an amine base, to eliminate HCl and thereby produce N-glycidylpiperazine. The addition of epichlorohydrin, and dehydrohalogenation are carried out at a temperature of from 0°C to 50°C, and the resulting N-glycidylpiperazine is a crystaline solid, which can be separated, and polymerised by heating to make a rubbery polymer. However, the polymerisation of N-glycidylpiperazine is very difficult to control, and in practice it is difficult or impossible to stop the polymerisation at a point at which the polymer is not a solid, or a best a gel.

GB Patent 1416454 purports to disclose a method for the preparation of a water-soluble polymer by condensation of epichlorohydrin and piperazine, at a mole ratio of approximately 1:1, and in the prescence of strong base (NaOH). However, the reaction there disclosed is notoriously difficult to control, and almost invariably results in the production of a solid or gelled product.

European Patent Specification 0033104 (and corresponding U.S. Patent 4328142) disclose the preparation of a water soluble polymeric cross-linking agent for polyamines from epichlorohydrin and piperazine to produce a flocculant. In this method, a complex 2-stage reaction is required to produce the desired water-soluble prepolymer, the first stage of which is carried out in the prescence of strong base (NaOH), and the result of the first stage is then acidified, before further epichlorohydrin is added at low pH, for the second stage. Control of this reaction is difficult and therefore relatively expensive, because of the complex pH requirements furthermore the overall reaction for the production of the flocculant is a three stage one, which is complicated to implement on an industrial scale.

Finally, U.S. Patent No. 4482667 discloses modified polyalkylene polyamine compositions, prepared using epihalohydrins, and useful as fluid loss additives in hydraulic cement slurries.

We have now discovered that, by adding an epihalohydrin, for example epichlorohydrin, to piperazine, preferably in aqueous solution, in an amount of more than one mole of epihalohydrin per mole of piperazine, and polymerising the product in the substantial absence of strong base by causing or allowing the temperature of the reaction mixture to rise to a level of greater than 50°C, a prepolymer can be produced with a relatively low molecular weight, which is reactive under appropriate conditions, again in the absence of strong base, with polyamines (which term is used herein is intended to mean a compound having at least two amine functional groups), so as to produce a water-soluble polymer material. The polymer product is useful as a flocculant for example in the paper industry or any other industry in which flocculants are utilised.

Both stages of the reaction in accordance with the invention are carried out in the substantial absence of strong base, i.e. bases with strengths of the order of NaOH and KOH. The presence of strong base makes both the reaction forming the prepolymer, and the subsequent reaction with the polyamine, very difficult to control, so that the desired molecular weight is obtained.

The prepolymer formed is believed to have a complex structure with a mole ratio of epihalohydrin to piperazine of about 1, a weight average molecular weight of from 2,000 to 5,000, and the halogen originating from the epihalohydrin being attached to the piperazine rings in the form of HCl. The molar excess of epihalohydrin is converted to 1,3, dichloro propanol-2, which it is believed becomes attached to the polymer structure in some way.

Whatever its structure, the prepolymer can readily be polymerised with polyamines, for example tetraethylenepentamine and the like, to produce water-soluble polymers again in the substantial absence of strong base. Hence, the invention should not be construed as being limited by any theory as to the structure of the prepolymer, since whatever its structure the prepolymer prepared using the particular choice of the molar ratio of starting materials, and method of prepolymerisation in the absence of strong base, is water soluble, has a high reactivity and low molecular weight, and is useful as a starting material, from which may be produced a desired water soluble polymer, useful as a flocculant.

According to the invention, there is therefore provided a process for preparing a nitrogen-containing water soluble polymer, which method comprises preparing a water-soluble prepolymer, by adding an epihalohydrin to a solution of piperazine in a solvent, in an amount of more than one mole of epihalohydrin per mole of piperazine, polymerising the reaction mixture at a temperature of from 50°C to 110°C in the substantial absence of strong base, to produce the prepolymer and heating the prepolymer with a polyamine in the substantial absence of strong base to produce a water-soluble nitrogen containing polymer.

The molar ratio of the epihalohydrin to piperazine is of great importance in controlling the polymerisation properties of the prepolymer. As indicated above, the epihalohydrin must be used in an amount of more than one mole per mole of piperazine. It is preferred that the amount of epihalohydrin should be at least 1.1 moles, per mole of piperazine. If the amount of epihalohydrin is less than 1.1 moles, the prepolymer tends to be somewhat unreactive, when reacted with the polyamine.

The upper limit of the mole ratio of epihalohydrin to piperazine is governed by practical constraints, since if a substantial excess of epihalohydrin is used, for example 2 moles per mole of piperazine, the resulting prepolymer product becomes extremely reactive in subsequent reaction with the polyamine, and thus the reaction is difficult to control, and tends to lead to gel formation. A preferred range of the starting materials is from 1.1 to 1.3 moles of epihalohydrin, per mole of piperazine.

Both the epihalohydrin and the piperazine are preferably utilised in the form of aqueous solutions, and the concentration of the starting materials in the aqueous solutions is preferably such to produce a concentration of the resulting prepolymer product of from 25 to 50% by weight, preferably from 35 to 45% by weight. The concentration of the prepolymer product in the solution has a marked effect on the viscosity, and thus the ease of handling of the prepolymer product. For example, a 40% solution of a typical prepolymer product will have a viscosity of from 80 to 400 mPa.s, whereas a 60% solution of the same product has a viscosity of about 26,000 mPa.s. The weight average molecular weight of the prepolymer is generally from 2,000 to 5,500.

In the preparation of the prepolymer, it is essential that the epihalohydrin be added to piperazine, not the reverse, since the reverse order of addition gives an entirely different product, which is not reactive with polyamines to produce a water-soluble polymer.

The reaction of the epihalohydrin with piperazine is exothermic, but the temperature is preferably raised initially to 50°C or so, to allow the reaction to begin. The epihalohydrin is then added slowly and at a rate such that the reaction mixture is preferably maintained at a temperature of less than 110°C, preferably from 90 to 110°C, during the addition. It may be desirable to heat the reaction mixture during the later stages of the addition to maintain the temperature in this range.

The reaction mixture is preferably maintained at a temperature of from 90 to 110°C, for a further period of from 1 to 4 hours, preferably from 1 to 2 hours after the addition is complete, to complete the reaction. If the heating following the addition is carried out for a period of less than 2 hours, the prepolymer tends to be too reactive, and if for more than 6 hours, unreactive.

The preferred epihalohydrin is epichlorohydrin although epibromohydrin is also suitable. The reactive nitrogen-containing prepolymer is reacted with a polyamine (i.e. any organic compound having at least two amine functional groups), to produce a polymer. Preferred polyamines are the polyalkylene polyamines, for example, triethylenetetramine, tetraethylenepentamine, pentaethylenehexamine, hexamethyleneheptamine, and mixtures of two or more thereof. We have found in particular that the lower molecular weight polyalkylene amines, for example ethylenediamine and diethylenetriamine are much less preferred than somewhat higher molecular weight polyamines, e.g. those having a molecular weight of the order of that of triethylenetetramine. Particularly preferred is a mixture of pentaethylenehaxamine and hexamethyleneheptamine.

The reaction is preferably carried out by adding an aqueous solution of the prepolymer product to an aqueous solution of the polyamine. The order of addition is important, in that addition of the polyamine to the prepolymer product gives little or no polymerisation. The prepolymer is preferably added slowly, and the viscosity measured continuously until the desired viscosity is reached.

The solution of the polymer produced generally has viscosity of from 500 to 5000 mPa.s, preferably from 1000 to 3000 mPa.s. and a weight average molecular weight of from 7,500 to 75,000, preferably from 10,000 to 60,000. It has been found suitable to utilise solutions of prepolymer and polyamine having a concentration of from 35% to 45% by weight of prepolymer or polyamine in the solution, preferably approximately 40% by weight. This results in the production of a polymer product having a concentration of from 35% to 45% by weight, preferably approximately 40% by weight. The temperature of the reaction mixture is preferably maintained in the range of from 90 to 110°C, during addition of the prepolymer to the polyamine.

The polymer may be utilised as a flocculant for example in the paper making industry or any other industry in which flocculants are commonly utilised.

The invention is illustrated in the following examples.

EXAMPLES 1 to 5

86g of piperazine (one mole) was dissolved in 295g water in a 1 litre glass flask, equipped with a heating mantel, stirrer, thermometer, reflux condenser, and dropping funnel. The mixture was heated to 60°C, and then 97.1g epichlorohydrin (1.05 mole) was added over a period of 1 hour, at a rate sufficient to maintain the temperature at about 100°C. When all the epichlorohydrin had been added, the mixture was stirred for a further period of two hours, during which it was maintained at 95°C by applying heat, and the mixture was then cooled.

The concentration of the resulting prepolymer product in the aqueous solution was approximately 40% w/w and the viscosity was about 80 mPa.s. (all viscosities were measured using a rotating spindle-type viscosimeter type CONTRAVES Rheomat 15T-FC, using standard spindle 'C' at a shear rate of $76_s^{-1}$ ). The percentage conversion of organic chlorine to $Cl^-$ was determined by potentiometric titration with $AgNO_3$, to provide a measure of the organically bonded chlorine content of the prepolymer product and was found to be about 7% w/w. The amount of free epichlorohydrin was also measured and found to be less than 100 p.p.m. (wt.).

The process was repeated using differing amounts of epichlorohydrin, so as to provide molar ratios of epichlorohydrin to piperazine of 1.1 (Example 2), 1.2 (Example 3), 1.3 (Example 4), 1.4 (Example 5) and 1.0 (Comparative Example 1) as shown in Table 1.

TABLE 1

| Example No. | 1 | 2 | 3 | 4 | 5 | Comp Ex 1 |
|---|---|---|---|---|---|---|
| Amount of EPI (g) | 97.1 | 101 | 111 | 120 | 129.5 | 92.5 |
| Mole Ratio EPI/PIP | 1.05 | 1.1 | 1.2 | 1.3 | 1.4 | 1.0 |
| % Cl Conversion | 90.5 | 87.1 | 81.5 | 76.4 | 71.0 | 99 |

EXAMPLES 6 to 10

Preparation of Polymer Flocculants

Each of the aqueous solution resulting from Examples 1 to 5 above was used for the preparation of a polymeric flocculant. In each case, the solution was reacted with a solution of 20g of a polyalkylene polyamine in 30g water. The polyalkylene polyamine was a mixture of pentaethylenehexamine and hexaethyleneheptamine, with a weight average molecular weight of about 260.

The mixed polyalkylene polyamine solution was heated in the same flask as used in Example 1, to a temperature of 90°C. The reaction mixture from the respective one of Examples 1 to 5 was then added gradually, and the viscosity measured regularly. The addition was stopped when the product had a viscosity of about 2000 mPa.s. The concentration of the product in water was about 40% w/w. The resulting solution was a light yellow to brown in colour.

The weight ratio of the prepolymer to the polyalkaline polyamine was calculated, as was the mole ratio of the amount of epichlorohydrin used to form the prepolymer, to the total amine (including piperazine and polyethylene polyamine) in the product. The results are shown in Table 2.

The efficacy of the resulting product as a flocculant was measured by adding 0.5ml of a 1% solution of the product to 500ml of an aqueous suspension of kaolin in water (0.5 w/w). The concentration of the polymer flocculant was thus 10 ppm. The mixture was thoroughly shaken, and observed in a 500ml graduated cylinder, as the suspended kaolin was coagulated. The volume of supernatant liquid above the solid layer was used as a measure of the flocculating ability of the polymer. This volume was measured at regular intervals over a period of five minutes, and the results are also shown in Table 2.

Table 2 also shows for the purposes of comparison the results obtained when the flocculating ability of the prepolymer of Example 3 was tested, and a standard commercially available flocculant, Purifloc C31 (Purifloc is a Trade Mark).

TABLE 2

TABLE 2

| Example No. | 6 | 7 | 8 | 9 | 10 | Prepolymer Ex 3 | Purifloc C31 |
|---|---|---|---|---|---|---|---|
| Prepolymer Example No. | 1 | 2 | 3 | 4 | 5 | | |
| Wt ratio prepolymer/polyamine | 17.8 | 6.8 | 3.9 | 3.6 | 2.3 | | |
| Mole ratio epi-total amine | 1.01 | 0.99 | 1.00 | 1.00 | 1.03 | | |
| Concentration of flocculant in Flocculation test (ppm) | 10 | 10 | 10 | 10 | 15 | 15 | 10 |
| Time (minutes) | Volume of supernatant liquid | | | | | | |
| 0.5 | 410 | 375 | 370 | 360 | 370 | 460 | 375 |
| 1 | 330 | 200 | 195 | 205 | 210 | 400 | 220 |
| 1.5 | 145 | 135 | 130 | 135 | 135 | 300 | 150 |
| 2 | 120 | 110 | 110 | 120 | 120 | 230 | 110 |
| 3 | 95 | 90 | 90 | 100 | 100 | 110 | 110 |
| 4 | 90 | 80 | 85 | 90 | 85 | 90 | 95 |
| 5 | 85 | 75 | 80 | 80 | 80 | 80 | 90 |
| Appearance water layer | 1-2 | 0-1 | 0-1 | 1 | 1 | 2-3 | 0-1 |

O = water clear, O-1 = clear + some floating particles, 1 = almost clear, some haziness, 2 = fairly clear, more haziness than 1, 3 = almost opague, 4 = completely opague.

The product of Comparative Example 1 would not undergo polymerisation with the polyalkylene polyamine. As can be seen from Table 2, the products of Examples 6 to 10 had a flocculating ability which was comparable with, or better than that of Purifloc C31. The product of Example 6, having an EPI/PIP ratio in the prepolymer of only 1.05 was slightly inferior. The flocculating ability of the prepolymer of Example 3 was poor.

EXAMPLES 11 and 12

A solution consisting of 163g of the polyamine mixture used in Examples 6 to 10 and 244.5g of water was heated to a temperature of 110°C, and the solution resulting from Example 3 was added gradually, over a period of about three hours. The viscosity during this period at various weight ratios of prepolymer to polyamine was measured, as shown in Table 3. Portions of the reaction mixture were removed at weight ratios of 3.75 (Example 11) and 4.00 (Example 12).

EXAMPLES 13 and 14

Examples 11 and 12 were repeated, except that an aqueous solution of 103g triethylenetetramine (molecular weight 146) in 155g water was used, in place of the mixture of polyamines. The viscosity was measured as the polymerisation progressed, and results are shown in Table 4. Portions of the mixture were removed at weight ratios of prepolymer to polyamine of 7.9 (Example 13) and 8.5 (Example 14).

The flocculation ability of the polymers of Examples 11 to 14 was measured as in Examples 6 to 10, and the results are shown in Table 5.

TABLE 3

| Wt ratio prepolymer/polyamine | Viscosity mPa.s |
|---|---|
| 3.2 | 570 |
| 3.64 | 1308 |
| 3.75 | 1887 (Ex 11) |
| 4.00 | 4600 (Ex 12) |

TABLE 4

| Wt ratio prepolymer/TETA | Viscosity mPa.s |
|---|---|
| 5.5 | 284 |
| 7.6 | 505 |
| 7.8 | 1355 |
| 7.9 | 1817 (Ex 13) |
| 8.5 | 4170 (Ex 14) |

TABLE 5

| | Volume of supernatant Liquid | | | |
|---|---|---|---|---|
| Time (minutes) | Ex 11 | Ex 12 | Ex 13 | Ex 14 |
| 0.5 | 385 | 360 | 390 | 360 |
| 1.0 | 235 | 190 | 230 | 185 |
| 1.5 | 175 | 135 | 175 | 130 |
| 2 | 130 | 120 | 130 | 110 |
| 3 | 110 | 100 | 110 | 95 |
| 4 | 100 | 90 | 100 | 85 |
| 5 | 95 | 85 | 90 | 80 |
| Appearance | 1 | 0-1 | 1 | 1 |

**Claims**

1. A process for preparing a nitrogen-containing water soluble polymer, which method comprises preparing a water-soluble prepolymer, by adding an epihalohydrin to a solution of piperazine in a solvent, in an amount of more than one mole of epihalohydrin per mole of piperazine, polymerising the reaction mixture at a temperature of at least 50°C in the substantial absence of strong base, to produce the prepolymer and reacting the prepolymer with a polyfunctional amine in the substantial absence of strong base to produce a water-soluble nitrogen containing polymer.

2. A process as claimed in Claim 1, wherein the epihalohydrin is utilised in an amount of at least 1.1 moles per mole of piperazine.

3. A process as claimed in Claim 1 or Claim 2, wherein the epihalohydrin and the piperazine are utilised in the form of aqueous solution.

4. A process as claimed in Claim 3, wherein the concentrations of epihalohydrin and piperazine in the aqueous solution are such as to produce a concentration of the prepolymer in the resulting aqueous solution before reaction with the polyfunctional amine of from 35% to 45% by weight.

5. A process as claimed in any one of the preceding claims, wherein the reaction of epihalodydrin with piperazine is carried out at a temperature of from 50°C to 110°C.

6. A process as claimed in any one of the preceding claims, wherein the epihalohydrin is added to the piperazine over a period, at a rate such that the reaction mixture is maintained at a temperature of from 90°C to 110°C during the addition.

7. A process as claimed in any one of the preceding claims, wherein the reaction mixture is maintained at a temperature from 90°C to 110°C after the addition of the epihalodydrin to piperazine is complete, for a period of from 1 to 4 hours.

8. A process as claimed in any one of the preceding claims, wherein the epihalohydrin is epichlorohydrin.

9. A process as claimed in any one of the preceding claims, wherein the reaction of the prepolymer with the polyamine is carried out by adding an aqueous solution of the prepolymer to an aqueous solution of the polyamine.

10. A process as claimed in Claim 9, wherein the concentration of the prepolymer and the polyamine are such as to produce in the resultant mixture a polymer product having a concentration of from 35% to 45% by weight.

11. A method as claimed in Claim 9 or Claim 10, wherein the amount of the prepolymer added to the polyamine is such that the viscosity of the resulting product is from 500 to 5,000 mPa.s.

12. A process as claimed in any one of the preceding Claims, wherein the polyamine is triethylenetetramine, tetraethylenepentamine, pentaethylenehexamine, hexamethyleneheptamine, or a mixture of two or more thereof.

13. A process as claimed in any one of the preceding Claims wherein the reaction of the prepolymer with the polyamine is carried out at a temperature of from 90 to 110°C.

14. A nitrogen-containing water soluble polymer, prepared by the reaction of an epihalohydrin with piperazine in the substantial absence of strong base, to form a prepolymer, and the subsequent reaction of the prepolyer with a polyamine in the substantial absence of strong base, to form the water soluble polymer.

15. A flocculant composition comprising a polymer produced by a process as claimed in any one Claims 1 to 13, or Claim 14.

16. A method of causing flocculation of an aqueous liquid,

which method comprises adding to the liquid an amount of a water-soluble polymer as claimed in Claim 13, or produced by a process as claimed in any one of Claims 1 to 12.